# DEMANDE DE BREVET EUROPEEN

(11) **EP 1 560 198 A1**
(43) Date de publication de la demande: **03.08.2005**
(21) Numéro de dépôt: 05290202.0
(22) Date de dépôt: 28.01.2005
(51) Int. Cl.: G10L 13/04, H04M 3/493

(54) **Système de synthèse vocale pour des services vocaux interactifs**

(30) Priorité: 02.02.2004 FR 0400958
(71) Demandeur: FRANCE TELECOM, 75015 Paris (FR)
(72) Inventeur: Filoche, Pascal, 22700 Perros-Guirec (FR); Miquel, Paul, 22300 Lannion (FR); Hinard, Edouard, 22300 Lannion (FR)
(74) Mandataire: Cabinet Martinet & Lapoux

(57) **Abrégé**

Un système de synthèse vocale pour des services vocaux interactifs comprend un serveur vocal (SVI) relié à un réseau de paquets (RP) dispensant auprès d'un terminal d'usager (T) un service vocal (SV) en exécutant un fichier de service (FS) associé audit service vocal. Un client HTTP (CH) dans le serveur vocal transmet une requête (REQ) contenant un texte (TX) à synthétiser au cours de l'exécution du fichier de service. Le fichier de service comprend une adresse désignant une ressource dans un serveur de synthèse vocale (SSV) relié au réseau de paquets et une commande sensible au format audio pour commander la transmission de la requête au serveur de synthèse vocale. Un serveur HTTP (SH) dans le serveur de synthèse vocale transmet au serveur vocal une réponse audio (REPA) incluant le texte qui a été synthétisé (TXS) par le serveur de synthèse vocale indépendamment du serveur vocal.

## Description

La présente invention concerne un système et un procédé de synthèse vocale. Plus particulièrement l'invention concerne un système et un procédé de synthèse vocale pour des services vocaux interactifs conçus dans un serveur de gestion de services vocaux et dispensés par un serveur vocal interactif à un terminal d'usager.

Des serveurs vocaux interactifs connus intègrent directement des synthétiseurs vocaux qui synthétisent d'éventuels textes inclus classiquement dans des fichiers en langage VXML (Voice extensible Markup Language). Des balises spécifiques au langage VXML indiquent des parties de texte devant être synthétisées au serveur vocal interactif.

Actuellement bien que des langages émergents, tels que le langage SSML (Speech Synthesis Markup Language), permettent le contrôle de certaines caractéristiques au niveau tant de la synthèse vocale que de la reconnaissance vocale, aucun système de synthèse vocale n'est affranchi complètement des synthétiseurs des serveurs vocaux interactifs. Par conséquent, des prestataires de services vocaux doivent se conformer aux caractéristiques des synthétiseurs préexistants dans les serveurs vocaux, ce qui limite considérablement le domaine d'application de la synthèse vocale. Par exemple, un texte formaté spécifiquement pour une utilisation particulière tel qu'un courrier électronique (e-mail) au format RFC822 ne peut pas être synthétisé directement par un serveur vocal interactif sans modifier le serveur vocal lui-même, ce qui contraint les prestataires à être dépendant des fournisseurs de services vocaux.

La présente invention a pour **objectif** de rendre indépendant une synthèse vocale d'un serveur vocal interactif afin de pouvoir réaliser une synthèse vocale spécifique à un texte à synthétiser sans faire appel au serveur vocal.

A cette fin, un système de synthèse vocale pour des services vocaux interactifs comprend un serveur vocal interactif relié à un réseau de paquets dispensant auprès d'un terminal d'usager un service vocal en exécutant un fichier de service associé audit service vocal et un serveur de synthèse vocale relié au réseau de paquets et incluant un moyen de synthèse vocale. Le système de synthèse vocale est caractérisé en ce qu'il comprend :
un moyen dans le serveur vocal interactif pour transmettre une requête contenant un texte à synthétiser au cours de l'exécution du fichier de service, le fichier de service incluant une adresse désignant une ressource dans le serveur de synthèse vocale et une commande sensible à un format audio pour commander la transmission de la requête au serveur de synthèse vocale,
un moyen dans le serveur de synthèse vocale pour transformer le texte à synthétiser en un texte transformé en fonction d'un fichier de mise en forme passé en paramètre de l'adresse de la ressource afin que le moyen de synthèse vocale synthétise le texte transformé en un texte synthétisé, et
un moyen dans le serveur de synthèse vocale pour transmettre une réponse audio à ladite requête incluant le texte synthétisé au serveur vocal interactif.

Le fichier de service inclut l'adresse désignant une ressource dans le serveur de synthèse vocale et la commande sensible au format audio pour commander la transmission de la requête afin que le serveur vocal interactif n'accepte qu'une réponse audio à ladite requête. Grâce au passage du texte à synthétiser en paramètre de l'adresse de ressource, la synthèse vocale selon l'invention est plus facilement et rapidement mise en pratique.

Le texte à synthétiser peut être également localisé par une autre adresse de ressource passée en paramètre de l'adresse de ressource.

Avant que le moyen de synthèse vocale ne synthétise le texte à synthétiser, le moyen pour transformer transforme le texte à synthétiser en fonction de caractéristiques du texte à synthétiser. Les caractéristiques du texte à synthétiser peuvent être un type, un format et une langue du texte. Le type du texte à synthétiser peut correspondre à un courrier électronique ou un message court ou un message multimédia.

Le moyen pour transformer peut aussi transformer le texte à synthétiser en fonction de caractéristiques du moyen de synthèse vocale avant que le moyen de synthèse vocale ne synthétise le texte à synthétiser.

Selon un aspect avantageux de l'invention, le serveur de synthèse vocale peut également comprendre un moyen pour déterminer la langue du texte à synthétiser et un moyen pour traduire le texte à synthétiser dans une langue de traduction différente de la langue déterminée du texte à synthétiser. Le moyen de synthèse vocale synthétise alors le texte traduit en un texte synthétisé dans la langue de traduction.

Des prétraitements sur le texte tels que la transformation et la traduction sont effectués avantageusement juste avant la synthèse vocale du texte afin, par exemple, de préparer le texte à synthétiser à une synthèse vocale spécifique.

Le système de synthèse vocal peut comprendre plusieurs moyens de synthèse vocale dont l'un peut être inclus dans le serveur de synthèse vocale et qui sont répartis dans des serveurs de synthèse vocale reliés à travers le réseau de paquets. Le serveur de synthèse vocale sélectionne alors l'un des moyens de synthèse vocale pour synthétiser le texte à synthétiser en fonction de caractéristiques du texte à synthétiser.

L'invention concerne également un procédé de synthèse vocale pour services vocaux interactifs comprenant une exécution d'un fichier de service dans un serveur vocal interactif relié à un réseau de paquets afin de dispenser auprès d'un terminal d'usager un service vocal associé audit fichier de service. Le procédé selon l'invention est caractérisé en ce qu'il comprend :
une transmission d'une requête contenant un texte à synthétiser à un serveur de synthèse vocale relié au réseau de paquets, au cours de l'exécution du fichier de service, le fichier de service incluant une adresse désignant une ressource dans le serveur de synthèse vocale et une commande sensible à un format audio pour commander la transmission de la requête,
une transformation du texte à synthétiser en un texte transformé en fonction d'un fichier de mise en forme passé en paramètre de l'adresse de la ressource afin qu'un moyen de synthèse vocale dans le serveur de synthèse vocale synthétise le texte transformé en un texte synthétisé, et
une transmission d'une réponse audio à ladite requête incluant le texte synthétisé au serveur vocal interactif.

L'invention concerne aussi un serveur de synthèse vocale pour des services vocaux interactifs relié par l'intermédiaire d'un réseau de paquets à un serveur vocal interactif dispensant auprès d'un terminal d'usager un service vocal en exécutant un fichier de service associé audit service vocal et incluant un moyen de synthèse vocale. Le serveur de synthèse vocale est caractérisé en ce qu'il comprend :
un moyen pour transformer un texte à synthétiser, transmis par le serveur vocal interactif au cours de l'exécution du fichier de service dans une requête, le fichier de service incluant aussi une adresse désignant une ressource dans le serveur de synthèse vocale et une commande sensible à un format audio pour commander la transmission de la requête, en un texte transformé en fonction d'un fichier de mise en forme passé en paramètre de l'adresse de la ressource afin que le moyen de synthèse vocale synthétise le texte transformé en un texte synthétisé, et
un moyen pour transmettre une réponse audio à ladite requête incluant le texte synthétisé au serveur vocal interactif.

D'autres caractéristiques et avantages de la présente invention apparaîtront plus clairement à la lecture de la description suivante de plusieurs réalisations préférées de l'invention, à titre d'exemples non limitatifs, en référence aux **dessins** annexés correspondants dans lesquels :
- la figure 1 est un bloc-diagramme schématique d'un système de synthèse vocale pour des services vocaux interactifs édités depuis un serveur de gestion de services vocaux et dispensés par un serveur vocal interactif selon l'invention ;
- la figure 2 est un algorithme de consultation d'un service vocal depuis un terminal d'usager selon l'invention ; et
- la figure 3 est un algorithme du procédé de synthèse vocale d'un texte selon l'invention.

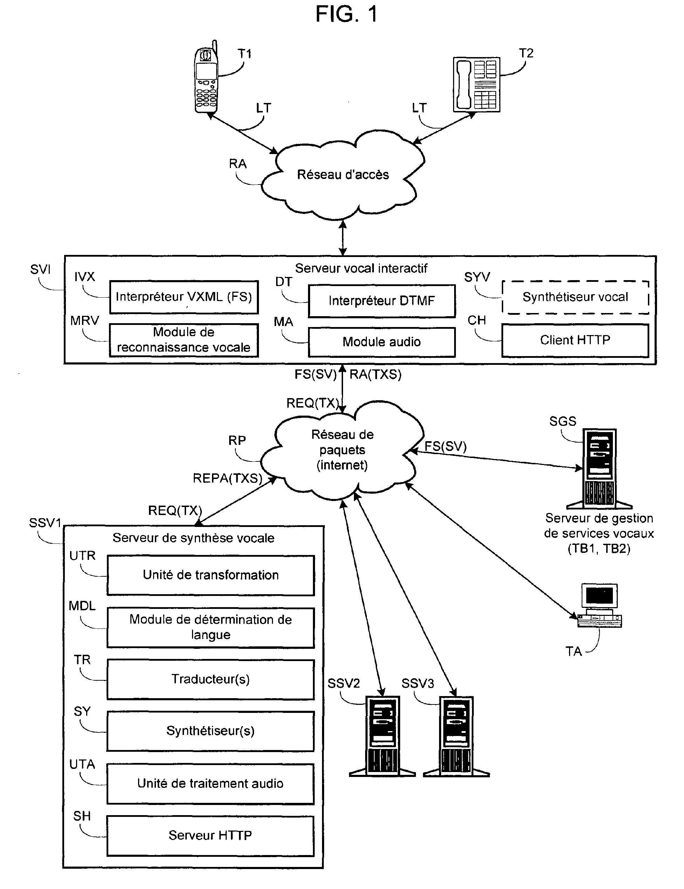

En référence à la figure 1, le **système de synthèse vocale** selon l'invention comprend principalement un serveur vocal interactif SVI, un serveur de gestion de services vocaux SGS couplé à un terminal d'administrateur TA, au moins un serveur de synthèse vocale SSV, et au moins un terminal d'usager T. Dans la figure 1, on a représenté trois serveurs de synthèse vocale SSV1, SSV2 et SSV3 et deux terminaux d'usager T1 et T2 respectivement désignés indifféremment par SSV et T dans la suite de la description.

Le serveur vocal interactif SVI communique avec le serveur de gestion de services vocaux SGS et le serveur de synthèse vocale SSV à travers un réseau de paquets à haut débit RP de type internet, et avec des terminaux d'usager T reliés à travers un réseau d'accès RA.

Selon la réalisation illustrée à la figure 1, le terminal T est relié au réseau d'accès RA par une liaison LT.

Le terminal T est par exemple un terminal de radiocommunications cellulaire mobile T1, la liaison LT est un canal de radiocommunications, et le réseau d'accès RA comprend le réseau fixe d'un réseau de radiocommunications, par exemple de type GSM (Global System for Mobile communications) avec un service GPRS (General Packet Radio Service), ou de type UMTS (Universal Mobile Telecommunications System).

Selon un autre exemple, le terminal T est un terminal fixe de télécommunications T2, la liaison LT est une ligne téléphonique et le réseau d'accès RA comprend le réseau téléphonique commuté.

Selon d'autres exemples, le terminal d'usager T comprend un dispositif ou objet électronique de télécommunications personnel à l'usager qui peut être un assistant numérique personnel communiquant PDA. Le terminal T peut être tout autre terminal domestique portable ou non tel qu'un ordinateur personnel relié directement par modem à la liaison LT et muni de haut-parleur, une console de jeux vidéo, ou un récepteur de télévision intelligent coopérant avec une télécommande à afficheur ou un clavier alphanumérique servant également de souris à travers une liaison infrarouge.

Selon d'autres variantes, la liaison LT est une ligne xDSL (Digital Subscriber Line) ou une ligne RNIS (Réseau Numérique à Intégration de Services) reliée au réseau d'accès RA correspondant.

Les terminaux d'usager T et le réseau d'accès RA ne sont pas limités aux exemples ci-dessus et peuvent être constitués par d'autres terminaux et réseaux d'accès connus.

Le terminal d'administrateur TA est typiquement un ordinateur personnel relié au réseau de paquets RP à travers lequel il communique avec le serveur de gestion de services vocaux SGS. Le terminal d'administrateur TA met à disposition une interface logiciel à un usager administrateur après connexion du terminal TA au serveur de gestion de services vocaux SGS pour que ce dernier édite le service vocal que l'usager administrateur souhaite mettre en oeuvre. Le serveur de gestion de services vocaux SGS génère alors un fichier de service FS comprenant la description d'un service vocal SV généralement en langage VXML (Voice extensible Markup Language) et mémorise le fichier de service FS afin de le mettre à la disposition du serveur vocal interactif SVI.

Le serveur de gestion de services SGS comprend principalement un serveur HTTP, une base de données et des modules logiciels.

Le serveur vocal interactif SVI comprend principalement et classiquement un interpréteur VXML IVX, un module de reconnaissance vocale MRV, un interpréteur DTMF (Dual Tone MultiFrequency) DT, un module audio MA, un synthétiseur vocal SYV et un client HTTP (HyperText Transfer Protocol) CH.

Le synthétiseur vocal SYV n'est pas utilisé dans la présente invention et a été montré sur la figure 1 pour illustrer le contexte connu de l'invention. En conséquence, le synthétiseur vocal SYV pourrait être supprimé.

Le serveur vocal interactif SVI comprend également au moins une unité de traitement d'appel afin de gérer des appels de services vocaux depuis les terminaux d'usager T. Par exemple, un terminal d'usager T sélectionne un service vocal SV auprès du serveur vocal interactif SVI qui exécute le fichier de service FS en langage VXML associé au service vocal SV sélectionné et transmis par le serveur de gestion de services vocaux SGS à la demande du serveur vocal interactif SVI, comme cela est préciser dans la description de l'algorithme de consultation du service vocal SV.

Le serveur de synthèse vocal SSV comprend principalement selon l'invention une unité de transformation UTR, un module de détermination de langue MDL, au moins un traducteur TR, au moins un synthétiseur SY, une unité de traitement audio UTA et un serveur HTTP SH.

Suite à une réception de fichier de service vocal par le client HTTP CH du serveur vocal interactif SVI, le client HTTP CH transmet une requête REQ contenant au moins un texte à synthétiser TX au serveur HTTP SH. Le synthétiseur SY synthétise le texte TX en un texte synthétisé TXS que le serveur HTTP transmet au serveur vocal interactif SVI dans une réponse audio REPA.

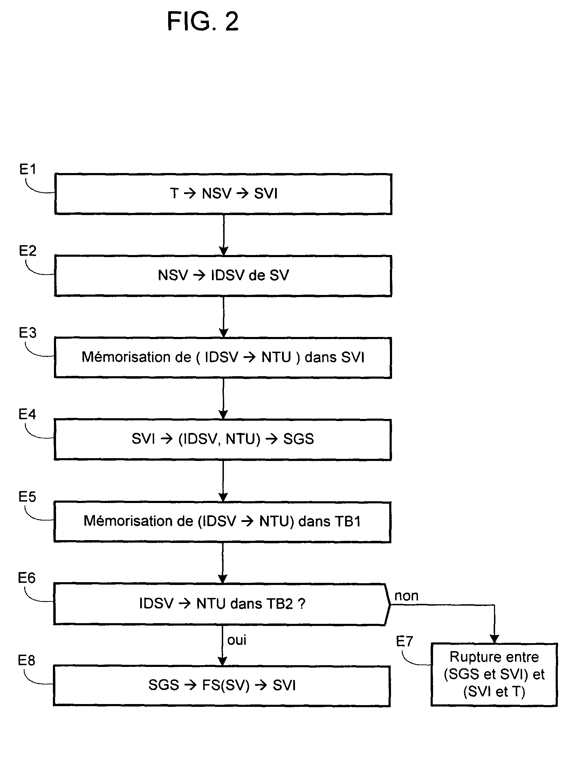

Comme montré à la figure 2, la **consultation d'un service vocal** SV depuis un terminal d'usager T comprend essentiellement des étapes E1 à E8.

A l'étape E1, le terminal d'usager T appelle classiquement le serveur vocal interactif SVI à travers le réseau d'accès RA, par exemple à travers le réseau téléphonique commuté, après que l'usager ait composé sur le clavier du terminal T un numéro téléphonique de service NSV pour appeler directement le service vocal SV de son choix dans le serveur SVI. Le numéro téléphonique NSV est ainsi transmis au serveur SVI. Le serveur SVI fait correspondre le numéro de service NSV à un identificateur IDSV du service vocal SV à l'étape E2.

Le serveur SVI mémorise l'identificateur IDSV du service vocal SV en association avec le numéro téléphonique NTU du terminal d'usager T à l'étape E3 et les transmet dans un paquet d'appel IP (Internet Protocol) à travers le réseau de paquets RP au serveur de gestion de services SGS à l'étape E4.

Le serveur de gestion de services SGS mémorise le couple IDSV-NTU à l'étape E5 dans une table TB1 de la base de données du serveur de gestion SGS, puis vérifie si l'usager désigné par le numéro NTU est autorisé à consulter le service vocal SV désigné par l'identificateur IDSV dans une table TB2 de la base de données à l'étape E6, des données relatives à un profil de l'usager étant préalablement enregistrées dans la table TB2. Si le numéro NTU n'est pas trouvé en correspondance avec l'identificateur IDSV dans la table TB2, l'usager n'est pas autorisé à consulter le service sélectionné et le serveur de gestion SGS rompt la communication avec le serveur vocal SVI qui rompt la communication avec le terminal d'usager T à l'étape E7. Eventuellement dans le cas contraire, l'usager est invité à composer un code d'accès confidentiel que reçoit le serveur de gestion SGS via le serveur vocal SVI afin de le comparer à celui inscrit en correspondance avec l'identificateur IDSV dans la table TB2. Si le code composé est incorrect, la communication est rompue.

Sinon, lorsque l'usager est autorisé à consulter le service vocal SV désigné par l'identificateur IDSV et a composé éventuellement le code confidentiel correctement, le serveur de gestion de services vocaux SGS transmet par des paquets IP le fichier de service FS en langage VXML en correspondance avec le service vocal SV au serveur vocal SVI à l'étape E8, afin que s'instaure un dialogue entre le terminal T et le serveur vocal SVI conformément à une navigation dans le service vocal SV.

Au cours du déroulement du service vocal SV dans le serveur vocal SVI sur la base du langage VXML et donc de la navigation de l'usager dans le service vocal SV, le serveur vocal SVI peut être sollicité classiquement pour appeler un fichier de son préenregistré désigné par une adresse URL (Uniform Resource Locator). L'adresse URL fait référence à une ressource située dans le serveur de gestion SGS ou dans un serveur quelconque relié au réseau de paquets RP.

Dans la technique antérieure, le serveur vocal SVI était sollicité pour synthétiser un texte ou un fichier texte dans le synthétiseur vocal SYV.

Dans la présente invention, le serveur vocal SVI est sollicité pour transmettre un texte à synthétiser au serveur de synthèse vocale SSV différent du serveur vocal SVI et relié au réseau de paquets RP.

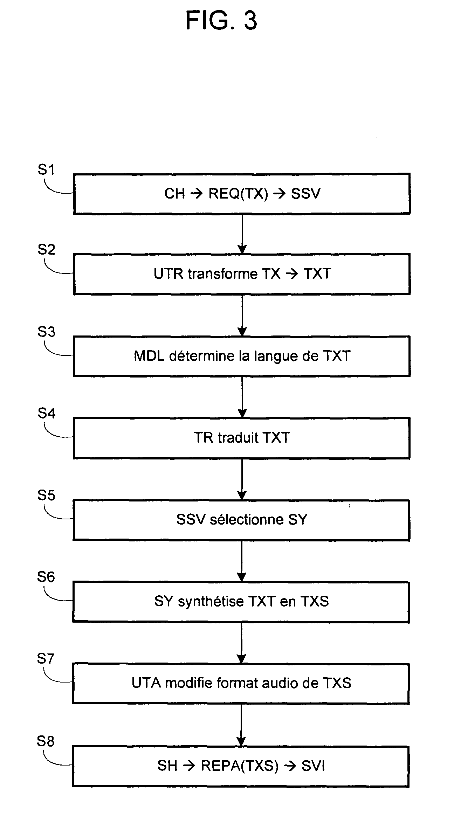

En référence à la figure 3, le **procédé de synthèse vocale** selon l'invention comprend principalement des étapes S1 à S8.

Préalablement l'administrateur du terminal d'administrateur TA, lors de l'édition du service vocal SV, a référencé le texte à synthétiser TX dans le serveur de synthèse SSV, en introduisant une adresse de ressource et une commande dans le fichier de service FS généré par le serveur de gestion SGS. L'adresse désigne une ressource dans le serveur de synthèse vocale SSV. La commande est sensible au format audio et commande la transmission de la requête REQ depuis le serveur vocal SVI afin que le serveur vocal SVI n'accepte qu'une réponse audio REPA à la requête REQ.

Un exemple de code de la commande en langage VXML incluse dans le fichier de service FS est montré en annexe 1 et fait appel à la balise "<audio>" du langage VXML. Le texte à synthétiser TX est alors passé en valeur d'un paramètre "text" de l'adresse de ressource.

Dans une variante, le texte à synthétiser TX est localisé par un paramètre "text" de l'adresse de ressource comprenant une adresse de ressource du texte à synthétiser. Le serveur de synthèse vocal consulte alors cette adresse de ressource du texte à synthétiser afin de récupérer le texte à synthétiser TX. L'adresse de ressource du texte à synthétiser TX pointe sur un quelconque serveur relié au réseau de paquets RP. Dans cette variante, le texte à synthétiser TX peut être généré dynamiquement.

Des caractéristiques du texte peuvent constituer des paramètres supplémentaires de l'adresse, tels qu'un type de texte à synthétiser ("type"), une langue de traduction ("ltraduc"), un format audio ("format"), un fichier de mise en forme ("fmf"), etc. Le type définit le texte à synthétiser TX, par exemple un texte simple, un courrier électronique (e-mail), un message court SMS (Short Message Service), un message multimédia MMS (Multimedia Messaging Service), une adresse postale, etc. Le paramètre "fmf" définit de la même manière que le paramètre "text", soit directement le contenu du fichier de mise en forme, soit une adresse de ressource de fichier de mise en forme permettant ultérieurement au serveur de synthèse vocale SSV de récupérer le contenu du fichier de mise en forme. Les paramètres supplémentaires sont précisés par l'administrateur du terminal TA lors de l'édition du service vocal SV. Les paramètres sont automatiquement codés par le serveur de gestion SGS afin d'être transmis par le protocole HTTP à travers le réseau de paquets RP.

Au cours de l'exécution du fichier de service FS, l'interpréteur VXML IVX dans le serveur SVI parcours la commande. A cet instant, le client HTTP CH transmet la requête REQ contenant le texte à synthétiser TX au serveur de synthèse vocale SSV à l'étape S1.

Le serveur HTTP SH reçoit la requête REQ, et l'unité de transformation UTR transforme le texte à synthétiser TX en un texte transformé TXT à l'étape S2. Cette transformation consiste à modifier le texte à synthétiser en fonction de caractéristiques du texte à synthétiser TX et/ou de caractéristiques du synthétiseur ou des synthétiseurs SY.

Lorsque le texte à synthétiser TX est de type e-mail, cela signifie qu'il comprend un e-mail à la norme RFC822, c'est-à-dire des champs tels que l'expéditeur, le destinataire, l'objet et le corps sont précisés dans le texte à synthétiser TX. L'unité de transformation UTR extrait alors ces différents champs afin de supprimer les noms des champs explicitement nommés dans le texte à synthétiser TX et reformule l'ensemble des champs en un texte transformé TXT cohérent pour une présentation vocale de l'e-mail. Un exemple de transformation sur un texte à synthétiser TX de type e-mail est montré en annexe 2.

Lorsque le texte à synthétiser TX est de type message court (SMS), il est souvent écrit à l'aide d'abréviations dans un style télégraphique. L'unité de transformation UTR corrige le texte à synthétiser TX afin de recomposer le texte à synthétiser TX en un texte corrigé TXT incluant des termes dans la langue du texte à synthétiser connus par le synthétiseur SY du serveur de synthèse SSV. Des exemples de transformation sur des textes à synthétiser TX de type message court (SMS) sont donnés en annexe 3.

Un autre exemple de type de texte à synthétiser est une adresse postale, par exemple "13 av. Champs Elysées". Par conséquent il est transformé par l'unité de transformation UTR en "treize avenue Champs Elysées".

Dans une variante, le texte à synthétiser TX est soit directement présenté dans un document au format XML (extensible Markup Language), soit transformé par l'unité de transformation UTR en un document au format XML.

Dans une autre variante, le type du texte à synthétiser TX n'est pas transmis en tant que paramètre, mais est déterminé automatiquement par l'unité de transformation UTR en réalisant une analyse textuelle du texte à synthétiser TX.

Dans une autre variante, la transformation ne dépend pas de caractéristiques du texte à synthétiser TX, mais dépend des caractéristiques du synthétiseur ou des synthétiseurs SY, telles que des balises du langage SSML (Speech Synthesis Markup Language) ajoutées au texte à synthétiser TX en vue de préparer le texte TX pour un synthétiseur SY interprétant le langage SSML.

Dans une autre variante, l'unité de transformation UTR transforme le texte à synthétiser TX (ou le fichier associé comprenant le texte à synthétiser), en fonction du fichier de mise en forme passé en paramètre de l'adresse de ressource. Ce fichier est généralement un fichier au format XSLT (extensible Stylesheet Language Transformations) lorsque le texte à synthétiser TX est sous la forme d'un document XML. Lorsque le texte à synthétiser TX n'est pas un document XML mais possède une structure arborescente implicite, le fichier de mise en forme est basé sur cette structure.

Par exemple, dans le cas d'un texte à synthétiser TX de type "entrée de base de données" présenté dans un document au format XML, le fichier de mise en forme au format XSLT précise des éléments du document au format XML à synthétiser, l'ordonnancement de ces éléments et des paramètres du synthétiseur vocal permettant notamment de définir une voix de synthèse vocale.

Dans un autre exemple, le texte à synthétiser TX est de type e-mail. Un e-mail n'est pas au format XML, mais présente une structure arborescente implicite comprenant un en-tête composé de champs tels que le destinataire, l'expéditeur, l'objet, le corps. Le corps peut être composé de plusieurs éléments tels que des paragraphes, une signature, un autre e-mail, etc. Le fichier de mise en forme précise au niveau de la transformation par exemple de manière spécifique au type, l'ordonnancement et/ou la présence des champs et/ou des éléments, ainsi que l'adjonction de temporisation et/ou d'éléments sonores.

Le texte à synthétiser TX peut être soumis à plusieurs transformations.

A l'étape S3, le module de détermination de langue MDL du serveur de synthèse vocale SSV détermine la langue du texte à synthétiser transformé TXT, afin que le traducteur TR traduise, à l'étape S4, le texte TXT en un texte à synthétiser transformé et traduit dans la langue passée en paramètre de l'adresse de ressource incluse dans le fichier de service FS.

En variante, le texte à synthétiser TX ou TXT, qui a subi le cas échéant une transformation dans l'unité UTR, est toujours traduit dans une langue unique prédéterminée lorsque la langue du texte à synthétiser TXT est différente de la langue unique. Dans cette dernière variante, il n'est pas nécessaire de transmettre la langue de traduction en paramètre.

Dans une autre variante le texte à synthétiser TXT n'est pas traduit.

Après l'étape de traduction S4, le serveur de synthèse vocale SSV sélectionne le synthétiseur SY le plus approprié à la synthèse vocale du texte à synthétiser TX, TXT à l'étape S5 afin que les caractéristiques prédéterminées du synthétiseur sélectionné SY correspondent aux caractéristiques du texte à synthétiser. Ces caractéristiques peuvent être confondues avec certains paramètres dans le fichier de service FS, tels que la langue de traduction, ou être déterminées par une analyse du texte à synthétiser TX, TXT, tels que le nombre de caractères, le contexte, etc.

Dans une variante, les synthétiseurs SY sont répartis dans les serveurs de synthèse vocale SSV1 à SSV3 représentés à la figure 1 et reliés à travers le réseau de paquets RP. L'adresse de localisation du serveur de synthèse vocale SSV1 à SSV3 qui inclut ledit synthétiseur SY le plus approprié est une caractéristique du synthétiseur SY.

Dans une variante, le texte à synthétiser transformé TXT est composé de termes en plusieurs langues. Le module de détermination de langue MDL reconnaît les langues dans le texte à synthétiser TX, TXT et segmente celui-ci en des segments consécutifs respectivement et au fur et à mesure en fonction des langues reconnues. Le serveur de synthèse vocale SSV sélectionne pour chaque segment l'un de plusieurs synthétiseurs SY inclus dans le serveur de synthèse vocal SSV, ou répartis dans les serveurs de synthèse vocale SSV1 à SSV3, en fonction de la langue du segment afin que le segment soit synthétisé dans la langue du segment.

Le texte à synthétiser TX, ou s'il est transformé, le texte transformé TXT est transmis au synthétiseur SY sélectionné afin que le texte à synthétiser TX, TXT, traduit ou non, soit synthétisé en un texte synthétisé TXS à l'étape S6.

A l'étape S7, l'unité de traitement audio UTA traite le texte synthétisé TXS en tant que fichier de son classique, afin de modifier le format du fichier de son selon le format précisé dans le paramètre correspondant dans le fichier de service FS, tel que par exemple "MP3", "WMA" ou "WAV". Dans une variante, le format n'est pas précisé en paramètre de l'adresse de ressource dans le fichier de service FS, et l'unité de traitement audio UTA modifie toujours le fichier de son associé au texte synthétisé TXS suivant un unique format.

A l'étape S8, le serveur HTTP SH transmet au serveur vocal SVI le texte synthétisé TXS dans la réponse audio REPA à la requête REQ. L'interpréteur VXML IVX dispose ainsi du fichier de son associé à la synthèse vocale du texte à synthétiser TXT.

En variante les caractéristiques du texte à synthétiser TX, TXT ne constituent pas des paramètres supplémentaires de l'adresse, mais sont déterminées automatiquement par une analyse du texte à synthétiser dans le serveur de synthèse vocale SSV, telles que le type ou le format audio.

Dans une autre variante certains paramètres, tels que le type ou le format audio, sont enregistrés dans une base de données du serveur de synthèse vocale SSV en correspondance avec un identificateur de client, et le seul paramètre alors transmis dans l'adresse de ressource est l'identificateur de client duquel les paramètres enregistrés précédents peuvent être déduits.

Dans une autre variante le serveur de gestion SGS et le serveur de synthèse SSV sont implémentés dans un unique serveur.

### ANNEXE 1

### Syntaxe de la commande en langage VXML

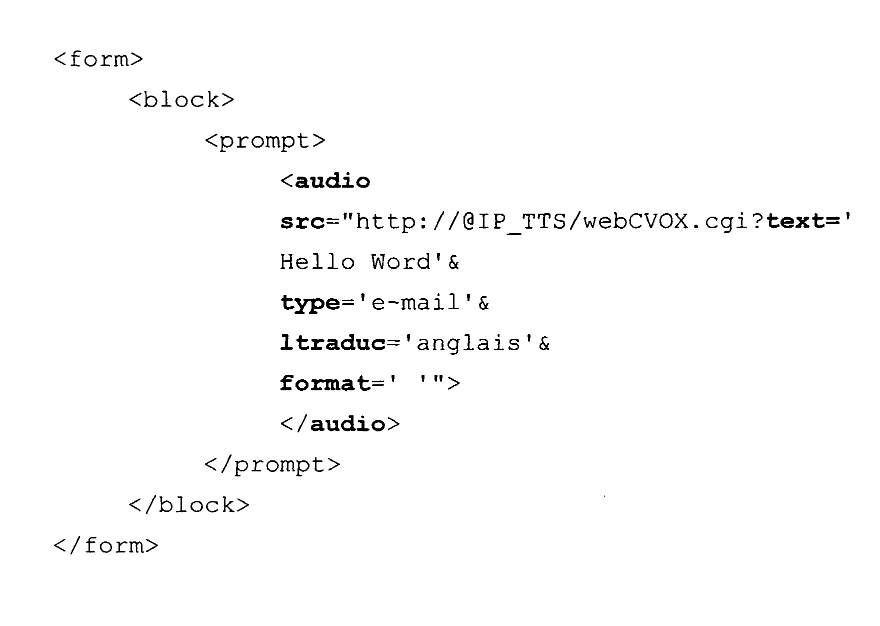

### ANNEXE 2

### Transformation du texte à synthétiser de type e-mail

Texte à synthétiser d'origine :
De : "Dupont Henri" <henri_dupont@wanadoo.fr>
A : paul_lanou@wanadoo.fr
Objet : vacances
Date : Wed, 7 Jan 2004 17:07:15 +0100
MIME-Version : 1.0
Content-Type : multipart/alternative
X-Priority : 3
Content : Bonjour Paul, j'espère que vous vous portez bien. Je vous écris au sujet de nos vacances prévues cet hiver au mois de février...

### Texte transformé :

Vous avez reçu un e-mail de Dupont Henri le 7 janvier 2004 à 17 heures et 7 minutes.
L'objet de cet e-mail est "vacances".
Voici le contenu de cet e-mail : "Bonjour Paul, j'espère que vous vous portez bien. Je vous écris au sujet de nos vacances prévues cet hiver au mois de février..."

### ANNEXE 3

### Transformation du texte à synthétiser de type message court

Texte à synthétiser d'origine à synthétiser TX :
1) g ht du kfe
2) dsl pr staprem
3) MDR le 6né
4) Pq tapel pa
5) Slt julien c elodi g u mon port 7 aprm je m'en vé 2ml
6) Keske jpe fér pr ktu pardonne...
7) Dsl mais j pourrais pas venir ce soir bonne soirée :) fran
8) Jpe pa tapelé, on fai com on a di:15h20 sou not arbre o parc!rep ou sonn 1 foi si t ok biz lee.

Texte transformé correspondant TXT :
1) j'ai acheté du café
2) désolé pour cet après-midi
3) mort de rire le ciné
4) pourquoi tu n'appelles pas
5) salut Julien c'est Elodie j'ai eu mon portable cet après-midi je m'en vais demain
6) qu'est-ce que je peux faire pour que tu pardonnes
7) désolé mais je pourrais pas venir ce soir bonne soirée <audio src="audio/up.wav" /> francs
   Dans ce message court remplacement du ":)", appelé communément "smiley", par un son de rire.
8) je peux pas t'appelles, on fait comme on a dit : 15h20 sous notre arbre au parc ! réponds ou sonne une fois si t'es ok bisou lee.

## Revendications

1. Système de synthèse vocale pour des services vocaux interactifs comprenant un serveur vocal interactif (SVI) relié à un réseau de paquets (RP) dispensant auprès d'un terminal d'usager (T) un service vocal (SV) en exécutant un fichier de service (FS) associé audit service vocal (SV), et un serveur de synthèse vocale (SSV) relié au réseau de paquets (RP) et incluant un moyen de synthèse vocale (SY), **caractérisé en ce qu'**il comprend :
un moyen (CH) dans le serveur vocal interactif (SVI) pour transmettre une requête (REQ) contenant un texte (TX) à synthétiser au cours de l'exécution du fichier de service (FS), le fichier de service incluant une adresse désignant une ressource dans le serveur de synthèse vocale (SSV) et une commande sensible à un format audio pour commander la transmission de la requête (REQ) au serveur de synthèse vocale (SSV),
un moyen (UTR) dans le serveur de synthèse vocale (SSV) pour transformer le texte à synthétiser (TX) en un texte transformé (TXT) en fonction d'un fichier de mise en forme passé en paramètre de l'adresse de la ressource afin que le moyen de synthèse vocale (SY) synthétise le texte transformé en un texte synthétisé, et
un moyen (SH) dans le serveur de synthèse vocale (SSV) pour transmettre une réponse audio (REPA) à ladite requête (REQ) incluant le texte synthétisé (TXS) au serveur vocal interactif (SVI).

2. Système conforme à la revendication 1, dans lequel le texte à synthétiser (TX) est localisé par une autre adresse de ressource passée en paramètre de l'adresse de ressource.

3. Système conforme à la revendication 1 ou 2, dans lequel le moyen pour transformer (UTR) transforme le texte à synthétiser (TX) en fonction de caractéristiques du texte à synthétiser avant que le moyen de synthèse vocale (SY) ne synthétise le texte à synthétiser.

4. Système conforme à la revendication 3, dans lequel les caractéristiques du texte à synthétiser (TX) sont un type, un format et une langue du texte.

5. Système conforme à la revendication 4, dans lequel le type du texte à synthétiser (TX) correspond à un courrier électronique ou un message court ou un message multimédia.

6. Système conforme à l'une quelconque des revendications 1 à 5, dans lequel le moyen pour transformer (UTR) transforme le texte à synthétiser (TX) en fonction de caractéristiques du moyen de synthèse vocale (SY) avant que le moyen de synthèse vocale (SY) ne synthétise le texte à synthétiser.

7. Système conforme à l'une quelconque des revendications 1 à 6, dans lequel le serveur de synthèse vocale (SSV) comprend un moyen (MDL) pour déterminer la langue du texte à synthétiser (TX) et un moyen (TR) pour traduire le texte à synthétiser (TX, TXT) dans une langue de traduction différente de la langue déterminée, le moyen de synthèse vocale (SY) synthétisant le texte traduit en le texte synthétisé (TXS) dans la langue de traduction.

8. Système conforme à l'une quelconque des revendications 1 à 7, comprenant plusieurs moyens (SY) de synthèse vocale (SY) afin que le serveur de synthèse vocale (SSV) sélectionne l'un des moyens de synthèse vocale (SY) pour synthétiser le texte à synthétiser (TX) en fonction de caractéristiques du texte à synthétiser (TX, TXT).

9. Système conforme à l'une quelconque des revendications 1 à 8, comprenant plusieurs moyens de synthèse vocale (SY), et dans lequel le serveur de synthèse vocal (SSV) comprend un moyen (MDL) pour segmenter le texte à synthétiser (TX, TXT) en des segments consécutifs respectivement et au fur et à mesure en fonction de langues reconnues et sélectionne l'un de moyens de synthèse vocale (SY) pour chaque segment en fonction de la langue du segment afin que le segment soit synthétisé dans la langue du segment.

10. Système conforme à la revendication 8 ou 9, dans lequel les moyens de synthèse vocale (SY) sont répartis dans des serveurs de synthèse vocale (SSV1 à SSV3) reliés à travers le réseau de paquets (RP).

11. Procédé de synthèse vocale pour des services vocaux interactifs comprenant une exécution d'un fichier de service (FS) dans un serveur vocal interactif (SVI) relié à un réseau de paquets (RP) afin de dispenser auprès d'un terminal d'usager (T) un service vocal (SV) associé audit fichier de service (FS), **caractérisé en ce qu'**il comprend :
une transmission (S1) d'une requête (REQ) contenant un texte (TX) à synthétiser à un serveur de synthèse vocale (SSV) relié au réseau de paquets (RP), au cours de l'exécution du fichier de service (FS), le fichier de service incluant une adresse désignant une ressource dans le serveur de synthèse vocale (SSV) et une commande sensible à un format audio pour commander la transmission de la requête (REQ),
une transformation (S2) du texte à synthétiser (TX) en un texte transformé (TXT) en fonction d'un fichier de mise en forme passé en paramètre de l'adresse de la ressource afin qu'un moyen de synthèse vocale (SY) dans le serveur de synthèse vocale (SSV) synthétise le texte transformé en un texte synthétisé, et
une transmission (S8) d'une réponse audio (REPA) à ladite requête (REQ) incluant le texte synthétisé (TXS) au serveur vocal interactif (SVI).

12. Procédé conforme à la revendication 11, selon lequel la transformation (S2) du texte à synthétiser (TX) en un texte transformé (TXT) est réalisée en fonction de caractéristiques du texte à synthétiser avant que le serveur de synthèse vocale (SSV) ne synthétise le texte à synthétiser.

13. Procédé conforme à la revendication 11 ou 12, selon lequel la transformation (S2) du texte à synthétiser (TX) en un texte transformé (TXT) est réalisée en fonction de caractéristiques du moyen de synthèse vocale (SY) avant que le serveur de synthèse vocale (SSV) ne synthétise le texte à synthétiser.

14. Serveur de synthèse vocale (SSV) pour des services vocaux interactifs relié par l'intermédiaire d'un réseau de paquets (RP) à un serveur vocal interactif (SVI) dispensant auprès d'un terminal d'usager (T) un service vocal (SV) en exécutant un fichier de service (FS) associé audit service vocal (SV) et incluant un moyen de synthèse vocale (SY), **caractérisé en ce qu'**il comprend :
un moyen (UTR) pour transformer un texte à synthétiser (TX), transmis par le serveur vocal interactif (SVI) au cours de l'exécution du fichier de service (FS) dans une requête (REQ), le fichier de service incluant aussi une adresse désignant une ressource dans le serveur de synthèse vocale (SSV) et une commande sensible à un format audio pour commander la transmission de la requête (REQ), en un texte transformé (TXT) en fonction d'un fichier de mise en forme passé en paramètre de l'adresse de la ressource afin que le moyen de synthèse vocale (SY) synthétise le texte transformé en un texte synthétisé, et
un moyen (SH) pour transmettre une réponse audio (REPA) à ladite requête (REQ) incluant le texte synthétisé (TXS) au serveur vocal interactif (SVI).
